# EUROPEAN PATENT SPECIFICATION

(11) **EP 1 918 011 B1**
(45) Date of publication and mention of the grant of the patent: **28.03.2012**
(21) Application number: 06405445.5
(22) Date of filing: 23.10.2006
(51) Int. Cl.: B01D 46/24, B01D 53/88, B01D 53/94, F01N 3/035

(54) **Apparatus for the catalytic conversion and for filtering particles from an exhaust gas stream**
Vorrichtung zur katalytischen Umwandlung und zum Filtern von in Abgasen enthaltenen Teilchen
Dispositif pour la conversion catalytique et pour la filtration de particules contenues dans un gas d'échappement

(43) Date of publication of application: 07.05.2008
(73) Proprietor: Scambia Industrial Developments AG, 9494 Schaan (LI)
(72) Inventor: Valgaeren, Rudi, 2250 Olen (BE)
(74) Representative: Bohest AG

(56) References cited:
- EP-A- 1 529 934
- EP-A2- 1 069 286
- WO-A-96/04509
- DE-A1- 19 540 045

## Description

### Technical field

The present invention relates to an apparatus for the catalytic conversion of one or more gaseous components contained in an exhaust gas stream as well as for filtering solid particles from the exhaust gas stream according to the preamble of the independent claim. EP-A-1 069 286 describes a similar apparatus.

An apparatus of this type is particularly useful for diesel combustion engines, e.g. diesel engines for cars, trucks, etc., but also for stationary operating diesel engines of machines used in the building trade. Environmental protection today requires that the emission of gaseous components which are detrimental to the environment, e.g. carbon monoxides, carbohydrates or nitrogen oxides, as well as the emission of solid particles, e.g. soot, be reduced to a minimum. This has resulted in the use of catalysts and particle filters, which are nowadays more or less standard components of new cars.

In a catalyst, essentially three chemical reactions take place, two of them being oxidation reaction and the third one being a reduction reaction:
- Carbon monoxide is oxidized to form carbon dioxide
- Carbohydrates are oxidized to form carbon dioxide and water
- Nitrogen oxides are reduced to form nitrogen and water

With regard to the solid particles, e.g. soot, particle filters for holding back the solid particles. In particular with respect to soot, the particles are collected in the particle filter which must be regenerated from time to time.

### Background art

An apparatus for the catalytic conversion of gaseous components contained in an exhaust gas stream as well as for filtering solid particles from the exhaust gas stream is known, for example, from WO 89/03720. In one embodiment shown in WO 89/03720, a stack of corrugated sheets and plane porous sheets or walls are arranged laterally adjacent to one another in alternating sequence so as to form a stack. The corrugations of two adjacently arranged corrugated sheets - with a plane porous sheet or wall being arranged between them - run orthogonal so as to allow cross-flow of exhaust gas from one channel of a corrugated sheet and a plurality of channels of the adjacently arranged corrugated sheet through the plane porous sheet or wall.

### Disclosure of the invention

The present invention suggests an apparatus for the catalytic conversion of one or more gaseous components contained in an exhaust gas stream as well as for filtering solid particles from the exhaust gas stream as it is characterized by the features of the independent claim. Additional embodiments are the subject of the dependent claims.

In particular, the present invention suggests an apparatus for the catalytic conversion of one or more gaseous components contained in an exhaust gas stream as well as for filtering solid particles from the exhaust gas stream, which comprises at least one catalytically active corrugated member for the catalytic conversion of the one or more gaseous components contained in the exhaust gas stream, and at least one filter member for filtering the solid particles from the exhaust gas stream. The member is a separate corrugated porous member which is arranged laterally adjacent to the catalytically active corrugated member such that the corrugations of the corrugated porous filter member are cross-angled to the corrugations of the catalytically active corrugated member when viewed in the overall direction of the exhaust gas stream through the apparatus. This allows cross-flow of exhaust gas between different cells formed between the corrugations of the catalytically active corrugated member and the corrugations of the corrugated filter member through the pores of the corrugated filter member.

The provision of both a corrugated catalytically active member or a plurality of such members and a corrugated porous member or a plurality of such members allows an improved cross-flow of the exhaust gas to occur since a high number of cells are formed between the cross-angularly arranged corrugations of the respective corrugated members, thus enabling both a good catalytic conversion of the gaseous components which are detrimental to the environment and a good filtering of the solid particles from the exhaust gas stream. In case the apparatus is arranged close to the engine, e.g. directly adjacent to the manifold of a car, then the temperature of the exhaust gas will be high - at least after a predetermined time interval when the engine has reached its operating temperature - so that soot which has been collected in the pores of the corrugated porous member will be completely burned and no external initialisation of the regeneration of the filter is necessary. In addition, since the catalytic reactions converting the gaseous components of the exhaust gas are exothermal, this raise of temperature also causes or assists in the burning of soot particles. Accordingly, such filter is free of maintenance, does not need any sensors or electronic circuits for regeneration of the filter nor is it necessary to mix specific additives to the Diesel fuel.

In one embodiment of the apparatus according to the invention, the apparatus comprises a plurality of catalytically active corrugated members and a plurality of corrugated porous filter members, with catalytically active corrugated members and corrugated porous filter members being arranged laterally adjacent to each other in alternating sequence.

While it is not mandatory that corrugated catalytically active members and corrugated porous filter members are arranged in alternating sequence - for example, it is conceivable that two corrugated porous members can be arranged between two corrugated catalytically active corrugated members, and other arrangements are conceivable, too - the alternating sequence arrangement is an effective embodiment for achieving both a good catalytic conversion of the gaseous components in the exhaust gas which are detrimental to the environment as well as a good filtering of the solid particles, e.g. soot.

In accordance with a further embodiment of the apparatus according to the invention, the angle of the corrugations of the catalytically active corrugated member or members relative to the overall direction of the exhaust gas stream through the apparatus is within a range of from 15° to 45°, and wherein the angle of the corrugations of the porous filter member or members is also within a range of from 15° to 45°.

That is to say, the cross-angle defined by the crossing corrugations of two adjacently arranged members, for example the cross-angle between the corrugations of a corrugated catalytically active member and the corrugations of an adjacently arranged corrugated porous filter members is within 30° and 90°. This enables a good cross-flow of exhaust gas to occur between the cells formed between the cross-angularly arranged corrugations of the adjacently arranged corrugated members.

In a practical embodiment of the apparatus according to the invention, the catalytically active corrugated member is made from a metal foil having a catalytically active coating, and the corrugated porous filter member is made from a mesh of thin wires, e.g. stainless steel wires. In this embodiment, the thickness of the metal foil as well as the thickness of the mesh both may be within a range of from 25 µm to 200 µm. The catalytically active coating may contain at least one catalytically active metal, e.g. platinum, palladium or rhodium.

In a further embodiment of the apparatus according to the invention, the cpsi of a single catalytically active corrugated member and the cpsi of a single corrugated porous filter member maybe within a range of from 80 to 450, (12·4 to 69·8 cells per cm²).

The term "cpsi" stands for cells per square inch. Imagine, that only corrugated foils having 69·8 cells per cm² (450 cpsi) were stacked cross-angled on top of each other. This means, that 450 cells would then be formed in a frontal area of the size of one square inch 69·8 cells per cm². In other words, the cpsi defines the height of the corrugations, i.e. the top to top distance of the corrugations. The lower the cpsi, the bigger the corrugations, and vice versa.

In a further embodiment of the apparatus according to the invention, a stack comprising a plurality of adjacently arranged catalytically active corrugated members and porous corrugated filter members is arranged within a casing having an inlet face and an outlet face for the exhaust gas stream. The catalytically active corrugated members and the porous corrugated filter members of the stack are fixed to the casing through welding so as to form a solid combined catalytic converter and particle filter module.

This is a practical embodiment for a compact module which can be used as a component that can be attached - e.g. with the aid of suitably formed end pieces or flanges of the module- to the manifold of the engine of a car. The compact module performs both functions the catalytic conversion of gaseous components which are detrimental to the environment as well as the filtering of soot particles. It is free of maintenance, self-regenerating, and can be retrofitted to the existing exhaust system of a car.

According to a specific embodiment the apparatus may comprise a plurality of such adjacently arranged combined catalytic converter and particle filter modules. This may be useful e.g. for trucks.

### Brief description of the drawings

Embodiments of the apparatus according to the invention will now be described in more detail with the aid of the drawings, in which:
Fig. 1 shows a side view of an embodiment of a catalytically active corrugated member, embodied as a coated metal foil
Fig. 2 schematically shows a section through the foil along line II-II of Fig. 1 in order to show the profile of the corrugations of the metal foil
Fig. 3 show a side view of an embodiment of a corrugated porous member, embodied as a mesh
Fig. 4 schematically shows a section through the foil along line IV-IV of Fig. 3 in order to show the profile of the corrugations of the mesh
Fig. 5 shows the detail V of Fig. 3 in an enlarged view in order to show the pores of the mesh
Fig. 6 shows a side view of a module having a casing within which two stacks of corrugated metal foils and corrugated meshes are arranged in series and welded to the casing
Fig. 7 schematically shows a front view of the inlet surface for the exhaust gas of the module shown in Fig. 6
Fig. 8 shows detail VIII of Fig. 6 in order to illustrate the cross-angled arrangement of the foil and the mesh
Fig.9 shows a perspective view of the module
Fig. 10 shows a perspective view of an arrangement of four modules, and
Fig. 11 shows a perspective view of an arrangement of sixteen modules

### Mode(s) for carrying out the invention

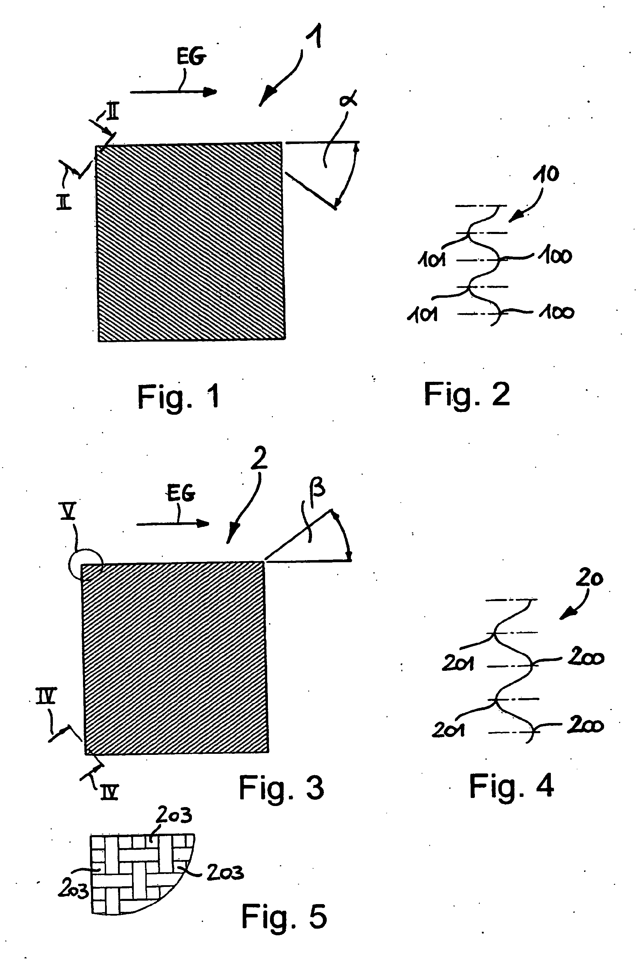

In Fig. 1 there is shown a corrugated catalytically active member 1 of an embodiment of the apparatus according to the invention. Catalytically active member 1 is embodied as a metal foil, e.g. a chromium aluminium foil, having a catalytically active coating in form of a wash coat that has been applied to the metal foil. The way how such wash coat may be applied to the metal foil is known for example, from EP-A-0 775 808. The coating comprises a catalytically active substance, e.g. a precious metal such as platinum, palladium or rhodium.

Catalytically active member 1 has a corrugated profile, which is schematically represented in Fig. 2, which shows a section along line II-II of Fig. 1, and which in particular shows corrugations 10. As can be seen from Fig. 1, corrugations 10 of catalytically active corrugated member 1 are angled relative the overall direction EG of the exhaust gas stream, that is to say they enclose an angle α with the overall direction EG of the exhaust gas stream. In particular, the angle α may be within 15° to 45°.

The cpsi of catalytically active corrugated member 1 - cpsi as having been explained further above (cells per square inch) is typically in the range of from 80 to 450 12·4 to 69·8 cells per cm², and may in particular be about 400. (62 per cm²)

In Fig. 3 there is shown a porous corrugated filter member 2 of an embodiment of the apparatus according to the invention. Porous corrugated filter member 2 is embodied as a wire mesh of e.g. stainless steel wires, which may also have a catalytically active wash coat applied to it, like this has been described with reference to the metal foil 1 (see above).

Porous corrugated filter member 2 has a corrugated profile, which is schematically represented in Fig. 4, which shows a section along line IV-IV of Fig. 3, and which in particular shows corrugations 20. The distance between two crests 200 of corrugations 20 or between two troughs 201 of corrugations 20 of porous corrugated filter member 2 in the shown embodiment is not the same as the distance between two crests 100 or the distance between two troughs 101 of catalytically active corrugated member 1. Also, the top to top distance of the profile is not the same. However, it is to be noted that they can also be identical.

The cpsi of corrugated porous filter member 2 - cpsi as having been explained further above (cells per square inch) is typically within the range of from 80 to 450 12·4 to 69·8 cells per cm², and may in particular be about 300. (46·5 per cm²).

As can be seen from Fig. 3, corrugations 20 of catalytically active corrugated member 2 are angled relative the overall direction EG of the exhaust gas stream, that is to say they enclose an angle β with the overall direction EG of the exhaust gas stream. In particular, the angle β may be within 15° to 45°. However, contrary to the angle α shown in Fig. 1 the angle β - strictly spoken - would have to be counted negatively, since a superposition of the angles α and β would result in an angle α+β being enclosed between the corrugations 10 and 20.

Fig. 5 shows detail V of Fig. 3 in an enlarged view. From this enlarged view the structure of the mesh can be seen in more detail, in particular the pores 203 can be recognized. The pores 203 of the mesh are so small that they allow gas to pass through, however, particles such as soot, are held back in the mesh. The thickness of the foil and the mesh may generally be within the range of from 25 µm to 200 µm.

As has already been mentioned above, in one embodiment of the apparatus according to the invention a stack comprising a plurality of catalytically active members 1 and a plurality of corrugated porous filter members 2 are arranged laterally adjacent each other in alternating sequence in a cross-angled manner.

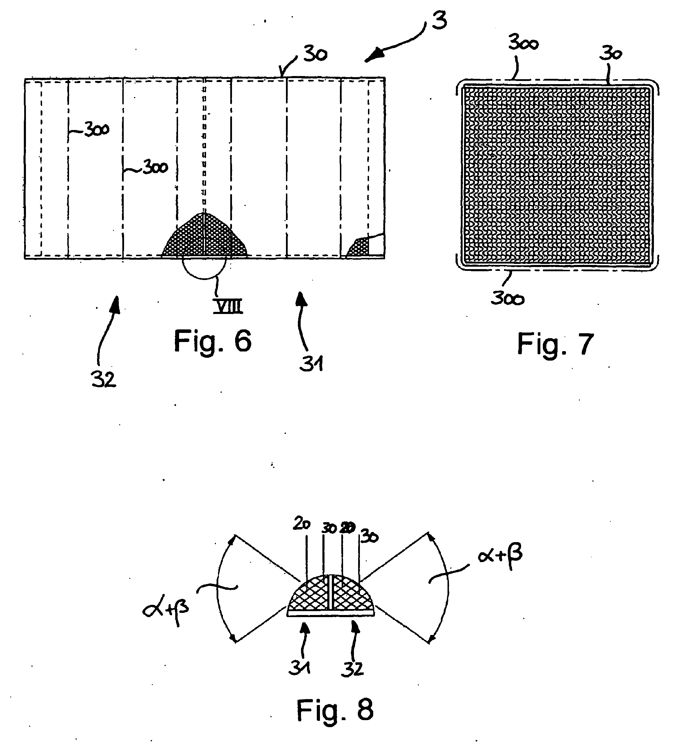

Fig. 6 shows a side view (partially broken away) of a module 3 having a casing 30 in which two stacks 31 and 32 are arranged in series with respect to the overall direction of the exhaust gas stream. Each stack comprises a plurality of catalytically active members 1 having corrugations 10 and a plurality of porous filter members 2 having corrugations 20 are arranged cross-angled, as can be seen from Fig. 8 showing detail VIII of Fig. 6, where the ends of the two stacks 31 and 32 are facing one another. Also, Fig. 8 shows in greater detail the cross-angled arrangement of catalytically active members 1 and its corrugations 10 and of the porous filter members 2 and its corrugations 20. From Fig. 8, the angle α+β resulting from the cross-angled arrangement can be seen. This angle may be within a range of from 30° to 90°.

The single catalytically active members 1 and porous filter members 2 are fixed to the casing 30 through welding along lines that run perpendicular to the direction of the overall direction of the gas flow. The welding is performed e.g. on the top and bottom of the casing 30 along lines 300, which are indicated, for example, in Fig. 7. Also, while Fig. 6 is a side view and the welding occurs on top of casing 30, the location of the respective lines 300 along the length of the casing are also indicated in Fig. 6. As can be seen from Fig. 6, the lines 300 may be equidistantly distributed along the length of module 3.

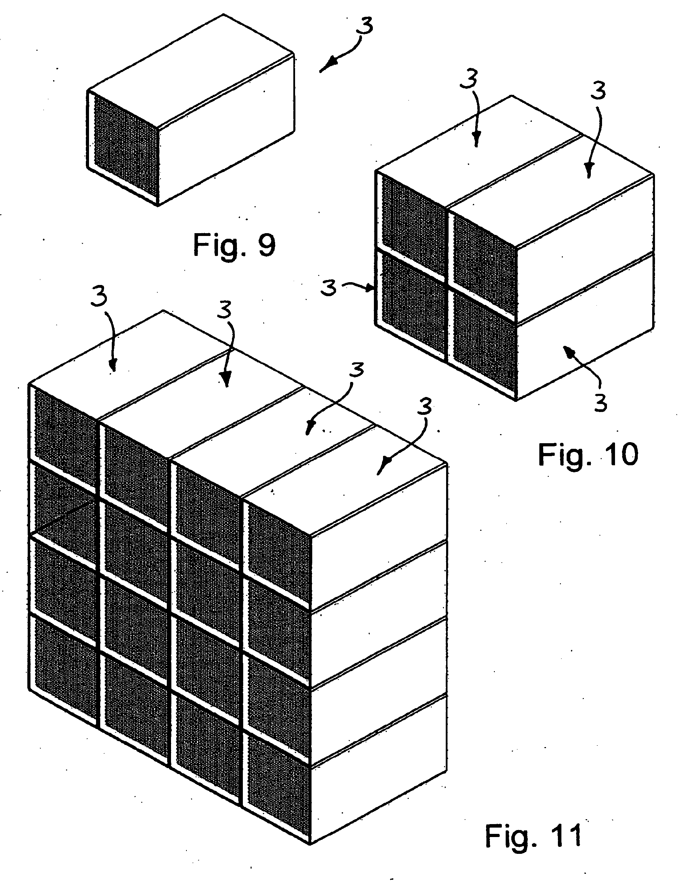

Fig. 9 shows a module 3 in a perspective view, while Fig. 10 shows an arrangement of four such modules 3 and Fig. 11 shows an arrangement of sixteen modules 3. An arrangement of a plurality of such modules 3 can be arranged in the exhaust system of a truck, for example.

A combined catalytic converter / particle filter as disclosed herein above is particularly useful for cars or trucks having diesel combustion engines, however, as has been mentioned above it may also be useful for other applications, e.g. for machines used in the building trade.

## Claims

1. Apparatus for the catalytic conversion of one or more gaseous components contained in an exhaust gas stream as well as for filtering solid particles from the exhaust gas stream, comprising at least one catalytically active member (1) for the catalytic conversion of the one or more gaseous components contained in the exhaust gas stream, and at least one separate porous filter member (2) for filtering the solid particles from the exhaust gas stream, **characterized in that** both the catalytically active member and the separate porous filter member are corrugated members, and **in that** the separate corrugated porous filter member is arranged laterally adjacent to the catalytically active corrugated member (1) such that the corrugations (20) of the corrugated porous filter member (2) are cross-angled to the corrugations (10) of the catalytically active corrugated member (1) when viewed in the overall direction (EG) of the exhaust gas stream through the apparatus, so as to allow crossflow of exhaust gas between different cells formed between the corrugations (10) of the catalytically active corrugated member (1) and the corrugations (20) of the corrugated filter member (2) through the pores (203) of the corrugated filter member (2), with the catalytically active corrugated member (1) being made from a metal foil having a catalytically active coating and the corrugated porous filter member (2) being made from a mesh of thin wires, e.g. stainless steel wires.

2. Apparatus according to claim 1, comprising a plurality of catalytically active corrugated members (1) and a plurality of corrugated porous filter members (2), with catalytically active corrugated members (1) and corrugated porous filter members (2) being arranged laterally adjacent to each other in alternating sequence.

3. Apparatus according to any one of the preceding claims, wherein the angle (α) of the corrugations (10) of the catalytically active corrugated member (1) or members relative to the overall direction (EG) of the exhaust gas stream through the apparatus is within a range of from 15° to 45°, and wherein the angle (β) of the corrugations (20) of the porous filter member (2) or members is also within a range of from 15° to 45°**.**

4. Apparatus according to any one of the preceding claims, wherein the thickness of the metal foil as well as the thickness of the mesh both are within a range of from 25 µ m to 200 µ m.

5. Apparatus according to any one of the preceding claims, wherein the catalytically active coating contains at least one catalytically active metal, e.g. platinum, palladium or rhodium.

6. Apparatus according to any one of the preceding claims, wherein the cpsi of a single catalytically active corrugated member (1) and the cpsi of a single corrugated porous filter member (2) Is within a range of from 80 to 450, that is to say, 2.4 to 69.8 cells per cm².

7. Apparatus according to any one of the preceding claims, wherein at least one stack (31,32) comprising a plurality of adjacently arranged catalytically active corrugated members (1) and porous corrugated filter members (2) is arranged within a casing (30) having an inlet face and an outlet face for the exhaust gas stream, and wherein the catalytically active corrugated members (1) and the porous corrugated filter members (2) of the stack are fixed to the casing through welding (300) so as to form a combined catalytic converter and particle filter module (3).

8. Apparatus according to claim 7, comprising a plurality of adjacently arranged combined catalytic converter and particle filter modules (3).

## Patentansprüche

1. Vorrichtung zur katalytischen Umwandlung einer oder mehrerer gasförmiger in einem Abgasstrom enthaltener Bestandteile sowie zur Filtration von Feststoffen aus dem Abgasstrom, umfassend mindestens einen katalytisch aktiven Teil (1) zur katalytischen Umwandlung der ein oder mehreren gasförmigen im Abgasstrom enthaltenen Bestandteile, und mindestens einen separaten porösen Filterteil (2) zur Filtration der Feststoffe aus dem Abgasstrom, **dadurch gekennzeichnet dass** sowohl der katalytisch aktive Teil als auch der separate poröse Filterteil gewellte Teile sind, und dass der separate gewellte poröse Filterteil derart seitlich benachbart zum katalytisch aktiven gewellten Teil (1) angeordnet ist, dass die Wellungen (20) des gewellten porösen Filterteils (2), bei Betrachtung in der gesamthaften Richtung (EG) des Abgasstroms durch die Vorrichtung hindurch, unter einem kreuzenden Winkel zu den Wellungen (10) des katalytisch aktiven gewellten Teils (1) angeordnet sind, um einen Kreuzstrom aus Abgas zwischen verschiedenen Zellen, die zwischen den Wellungen (10) des katalytisch aktiven gewellten Teils (1) und den Wellungen (20) des gewellten Filterteils (2) gebildet sind, durch die Poren (203) des gewellten Filterteils (2) hindurch zuzulassen, wobei der katalytisch aktive gewellte Teil (1) aus einer Metallfolie mit einer katalytisch aktiven Beschichtung hergestellt ist und der gewellte poröse Filterteil (2) aus einem Gewebe aus dünnen Drähten, z.B. rostfreien Stahldrähten, hergestellt ist.

2. Vorrichtung gemäss Anspruch 1, umfassend eine Vielzahl katalytisch aktiver gewellter Teile (1) und eine Vielzahl gewellter poröser Filterteile (2), wobei die katalytisch aktiven gewellten Teile (1) und die gewellten porösen Filterteile (2) seitlich nebeneinander in alternierender Reihenfolge angeordnet sind.

3. Vorrichtung gemäss einem der vorangehenden Ansprüche, wobei der Winkel (α) der Wellungen (10) des katalytisch aktiven gewellten Teils (1) oder Teile relativ zu der gesamthaften Richtung (EG) des Abgasstroms durch die Vorrichtung hindurch in einem Bereich von 15° bis 45° liegt, und wobei der Winkel (β) der Wellungen (20) des porösen Filterteils (2) oder -teile ebenfalls in einem Bereich von 15° bis 45° liegt.

4. Vorrichtung gemäss einem der vorangehenden Ansprüche, wobei die Dicke der Metallfolie sowie die Dicke des Gewebes beide im Bereich von 25 µm bis 200 µm liegen.

5. Vorrichtung gemäss einem der vorangehenden Ansprüche, wobei die katalytisch aktive Beschichtung mindestens ein katalytisch aktives Metal, z.B. Platin, Palladium oder Rhodium, enthält.

6. Vorrichtung gemäss einem der vorangehenden Ansprüche, wobei der CPSI eines einzelnen katalytisch aktiven gewellten Teils (1) und der CPSI eines einzelnen gewellten porösen Filterteils (2) in einem Bereich von 80 bis 450 liegt, also 12.4 bis 69.8 Zellen pro cm².

7. Vorrichtung gemäss einem der vorangehenden Ansprüche, wobei mindestens ein Stapel (31,32) umfassend eine Vielzahl benachbart angeordneter katalytisch aktiver gewellter Teile (1) und poröser gewellter Filterteile (2) in einem Gehäuse (30) angeordnet ist, welches eine Einlassseite und eine Auslassseite für den Abgasstrom aufweist, und wobei die katalytisch aktiven gewellten Teile (1) und die porösen gewellten Filterteile (2) des Stapels am Gehäuse durch Schweißen (300) befestigt sind, um ein kombiniertes Modul (3) zur katalytischen Umwandlung und Partikelfiltration zu bilden.

8. Vorrichtung gemäss Anspruch 7, umfassend eine Vielzahl benachbart angeordneter kombinierter Module (3) zur katalytischen Umwandlung und Partikelfiltration.

## Revendications

1. Appareil pour la conversion catalytique d'un ou plusieurs composants gazeux contenus dans un flux de gaz d'échappement ainsi que pour filtrer des particules solides du flux de gaz d'échappement, comprenant au moins un composant actif sur le plan catalytique (1) pour la conversion catalytique des un ou plusieurs composants gazeux contenus dans le flux de gaz d'échappement, et au moins un composant de filtre poreux séparé (2) pour filtrer les particules solides du flux de gaz d'échappement, **caractérisé en ce que** le composant actif sur le plan catalytique et le composant de filtre poreux séparé sont des composants ondulés, et **en ce que** le composant de filtre poreux ondulé séparé est agencé latéralement en position adjacente au composant ondulé actif sur le plan catalytique (1) de sorte que les ondulations (20) du composant de filtre poreux ondulé (2) sont à angle droit avec les ondulations (10) du composant ondulé actif sur le plan catalytique (1) observées dans la direction globale (EG) du flux de gaz d'échappement à travers l'appareil, de manière à permettre le flux croisé de gaz d'échappement entre les différentes cellules formées entre les ondulations (10) du composant ondulé actif sur le plan catalytique (1) et les ondulations (20) du composant de filtre ondulé (2) à travers les pores (203) du composant de filtre ondulé (2), le composant ondulé actif sur le plan catalytique (1) étant constitué d'une feuille métallique ayant un revêtement actif sur le plan catalytique et le composant de filtre poreux ondulé (2) étant constitué d'un treillis de fils métalliques fins, par exemple des fils d'acier inoxydable.

2. Appareil selon la revendication 1, comprenant une pluralité de composants ondulés actifs sur le plan catalytique (1) et une pluralité de composants de filtre poreux ondulés (2), les composants ondulés actifs sur le plan catalytique (1) et les composants de filtre poreux ondulés (2) étant agencés latéralement en position adjacente les uns par rapport aux autres en séquence alternée.

3. Appareil selon l'une quelconque des revendications précédentes, **caractérisé en ce que** l'angle (α) des ondulations (10) du composant ou des composants ondulés actifs sur le plan catalytique (1) par rapport à la direction globale (EG) du flux de gaz d'échappement à travers l'appareil est dans une plage de 15° à 45°, et l'angle (β) des ondulations (20) du composant ou des composants de filtre poreux (2) est également dans une plage de 15° à 45°.

4. Appareil selon l'une quelconque des revendications précédentes, dans lequel l'épaisseur de la feuille métallique ainsi que l'épaisseur du treillis sont dans une plage de 25 µm à 200 µm.

5. Appareil selon l'une quelconque des revendications précédentes, dans lequel le revêtement actif sur le plan catalytique contient au moins un métal actif sur le plan catalytique, par exemple le platine, le palladium ou le rhodium.

6. Appareil selon l'une quelconque des revendications précédentes, dans lequel le cpsi d'un composant ondulé actif sur le plan catalytique (1) individuel et le cpsi d'un composant de filtre poreux ondulé (2) individuel sont dans une plage de 80 à 450, c'est à dire 12.4 à 69.8 cellules par cm².

7. Appareil selon l'une quelconque des revendications précédentes, dans lequel au moins un empilage (31, 32) comprenant une pluralité de composants ondulés actifs sur le plan catalytique (1) et de composants de filtre ondulé poreux (2) est agencée dans un boîtier (30) ayant une face d'entrée et une face de sortie pour le flux de gaz d'échappement, et dans lequel les composants ondulés actifs sur le plan catalytique (1) et les composants de filtre poreux ondulés (2) de l'empilage sont fixés au boîtier par l'intermédiaire d'une soudure (300) de manière à former un module combiné de convertisseur catalytique et de filtre à particules (3).

8. Appareil selon la revendication 7, comprenant une pluralité de modules combinés de convertisseur catalytique et de filtre à particules (3).
